# EUROPEAN PATENT APPLICATION

(11) **EP 2 269 902 A1**
(43) Date of publication of application: **05.01.2011**
(21) Application number: 09718927.8
(22) Date of filing: 12.03.2009
(51) Int. Cl.: B62J 11/00, A42B 3/04, B62H 5/00, E05B 71/00

(54) **SAFETY DEVICE FOR FITTING A HELMET TO A VEHICLE AND HELMET THEREFOR**

(30) Priority: 12.03.2008 ES 200800733
(71) Applicant: Cortés Merino, Antonio, 29649 Mijas-Costas (Málaga) (ES)
(72) Inventor: Cortés Merino, Antonio, 29649 Mijas-Costas (Málaga) (ES)
(74) Representative: Canela Giménez, Teresa
(86) International application number: PCT/ES2009/000137
(87) International publication number: WO 2009/112617

(57) **Abstract**

A safety device for fitting a helmet to a vehicle and a helmet therefor are disclosed. The device is made of a plate **characterized in that** it contains a hook covered by a box-like lid made of a material with a reasonable degree of hardness. Said cover encloses and exposes the inner space housing the hook solidly attached to the plate adhered to the vehicle, and defining a recess extending away from the right-angles portion thereof, which portion receives the locking member with a corresponding stopper once the helmet is in place. The helmet is inserted by means of an opening in the rear portion thereof. The box housing the hook also houses a helmet wrapper made of a flexible and impervious material. The rear helmet opening through which the hook is inserted is provided with a flap connected to the helmet via a movable hinge.

## Description

The present invention refers to a generally hook-like device that is fitted to those vehicles for which use of helmets is mandatory, it making it possible for any helmet user, once the vehicle is parked, to leave the helmet in the vehicle, thereby obviating the need to carry it with them to wherever they are headed. The invention contains a locking member with a corresponding stopper for avoiding theft thereof and is located at the front part of the vehicle between the legs of the driver, at the rear part and at the footrests so that it takes up as little space as possible.

Safety helmets are always mandatory when making use of certain vehicles. Such skull-protecting helmets are, once the vehicle is parked, usually carried by their users anywhere they are going with the ensuing risk of leaving them behind. Due to the fact that the use of helmets is mandatory in motorized traffic it turns out to be cumbersome having to constantly carry them when travelling on foot. It is very common to secure such helmets to protruding safety chains that are in turn secured to some stationary hold so that, as safety chains are on most occasions excessively long, although helmets become effectively secured to said safety chains, they end up lying on the sidewalks or on the ground and, as a result of it, get filthy and dusty.

The field of invention of the present invention is the industry of vehicle accessories and particularly the industry of the mechanisms applied to safety helmets.

Some models having slightly similar features are disclosed in the state of the art, albeit none of them has neither the novelties proposed nor the specific placement of the invention.

Hence, it turns out that the most usual way to avoid theft of a helmet once a vehicle has been parked is to carry said helmet about with the ensuing inconveniences of having to take it everywhere and the risk of leaving it behind. There exist ways of securing a helmet to a vehicle but eventually the helmet ends up being fastened to the security chain itself used to moor said vehicle to some stationary object. This causes the helmet to lie on the ground and get filthy, apart from being also exposed to blows and eventual cracking. Document ES 1025472 U refers to a security system that is nonetheless fitted to the handlebars. Document U0225457 can only be applied to two-wheeled vehicles. Conversely, document 240371 discloses a fully applicable security system against thefts that requires, though, the handlebar be blocked with the ensuing loss of mobility. There exists a document, namely, number 0254147, that proposes a double fixing of the helmet and a tool case for motorcycles.

Compared to the present invention the above known systems pose the following inconveniences:
- The inconvenience of having to carry the helmet anywhere the users wishes to go with the ensuing risk of loss
- After being secured, helmets inconveniently end up lying on the ground with the ensuing risk of becoming filthy and damaged as a result of the blows received.

- Said systems are not applicable to any type of vehicle since, as they are fitted to the handlebar, they cannot be applied to vehicles provided with steering wheels.
- Blocking of the handlebars resulting from securing the helmets to them prevents maneuvering in case the vehicle for some reason is to be moved, unless the person that habitually uses the vehicle is present.
- The fact that the double fastening of the tool case and the helmet is only applicable to motorcycles and is not applicable to any vehicle for which use of a safety helmet by the users thereof is mandatory.

Against the above inconveniences the system proposed by the present invention contributes the following advantages to the state of the art:
- Low manufacturing costs
- A simple and practical mechanism since it comprises a locking member
- Safety against theft since the locking member prevents removal of the helmet
- Versatility as to use thereof in any kind of vehicle as it is possible to place it anywhere with an optimum, convenient and effective result.
- It is not necessary to block the vehicle since the invention is independent of motorcycle handlebars.
- It is also possible to fit the invention to non-motorized vehicles, such as bicycles, the use of which in most countries generally requires wearing a helmet.
- The possibility of securing more than one helmet.
- The possibility of including a plastic element to protect the helmets from the rain and other meteorological phenomena.
- It does not touch the ground. Helmets stay above the ground thereby preventing them from becoming filthy and protecting them from banging and breaking.

The combination of all the above elements gives a final result showing significant distinctive features with respect to the current state of the art.

Thus, the present invention comprises a plate that is adhered to an optimal spot in the vehicle in order to prevent disturbing driving and that contains a hook or curved stud which is covered by a box-like lid, if appropriate, that is fitted in place by the edges thereof, said box-like lid being made of a material with a reasonable degree of hardness intended to protect users against possible grazing. Said lid encloses and exposes the inner space housing the hook solidly attached to the flap adhered to the vehicle, and defines a recess extending away from the right-angled portion thereof, which portion receives the locking member ending with a stopper that serves to join the hook and the locking member and keeps the previously inserted helmet from moving towards and beyond the locking member. The helmet is inserted through an opening located at the rear portion thereof, the size of said opening matching the diameter of the hook in order to snugly confine the helmet therein, between the flap and the locking member. The box housing the hook also lodges a helmet wrapper made of a flexible and impervious material that can be unfolded to completely cover the helmet and thus protect it from weather inclemencies or banging. The device of the present invention can be fitted where deemed most appropriate, although the most advisable location is at the front, between the legs of the driver, back in the trunk or on the motorcycle footrests. This can be a double device in order to house more than one helmet. In motorcycles a helmet is placed on each footrest.

The functioning of the device begins when the driver parks the vehicle, then gets off it and finally takes off his/her safety helmet. Next, the driver opens the box, if necessary, and inserts the helmet in the hook. Then the driver inserts the locking member and thus the helmet is securely left in the vehicle due to the locking member that obstructs possible exit thereof. Upon starting the vehicle engine, the driver can very easily open up the locking member, then remove the helmet and finally cover the space taken up by the hook by means of the lid in order to avoid getting hurt by brushing his/her body against said hook.

The rear opening in the helmet through which it is inserted in the hook can be left covered or uncovered while said helmet is being used by the vehicle driver. To that end a door-like flap attached to the helmet by means of a movable hinge is provided.

The shape of the plate adhered to the vehicle can constitute a different embodiment. Such plate can be tubular-shaped and therefore suitable for bicycles or feature any other shape to better fit the structure or form of said vehicle.

In another embodiment, the surface of the plate adhered to the vehicle can be increased twofold so that said plate can comprise two hooks and fit two helmets.

Yet a different embodiment can be constituted by fitting the helmet wrapper in the footrests, this being possible because said helmet wrapper is made of flexible and creasable material that can be conformed to any space available. In this case the locking member is lodged at the end of the footrest and the helmet is inserted in footrest itself.

For a better understanding of this specification a drawing describing a preferred embodiment of the invention is accompanied as a non-limiting example thereof.

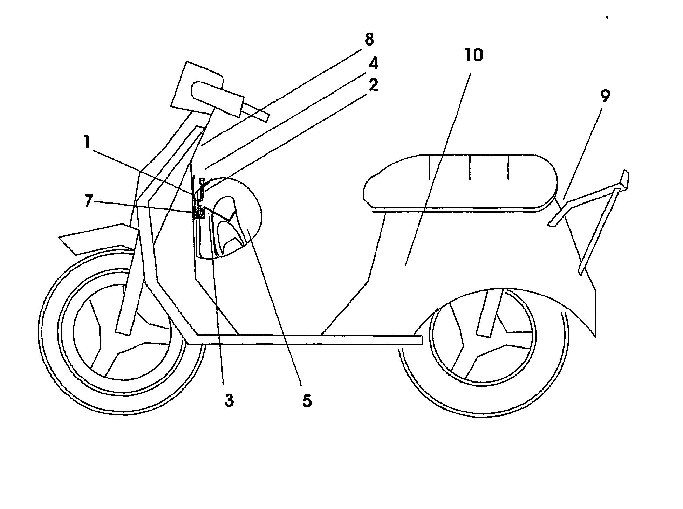

Figure 1 is a perspective view of the hook, the helmet and the locking member.

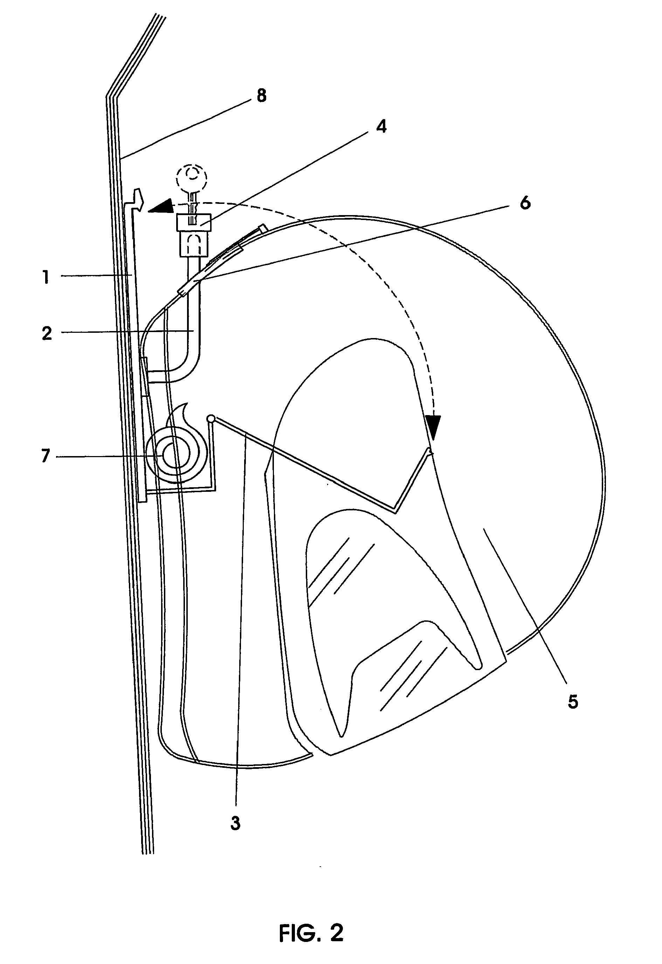

Figure 2 is a side of the safety device of the helmet.

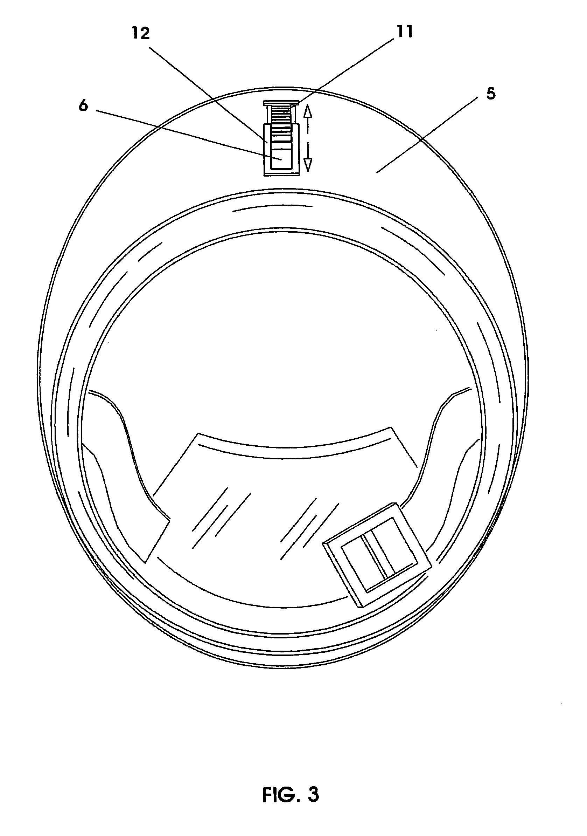

Figure 3 is a view of the helmet.

In said figures the following numbered elements stand out:
1. Plate
2. Hook
3. Lid that serves as a box
4. Locking member with stopper
5. Helmet
6. Helmet opening
7. Helmet wrapper
8. Front part of the vehicle
9. Rear part of the vehicle
10. Footrest
11. Flap for closing the helmet opening
12. Hinge

A proposed preferred embodiment of the invention comprises a plate (1) adhered to an optimal spot of the vehicle which contains a hook (2) or curved stud that is covered by a box-shaped lid (3) that is fitted in place by the edges thereof, said lid (3) being made of a material with a reasonable degree of hardness. Said lid (3) encloses and exposes the inner space housing the hook (2) solidly attached to the plate adhered to the vehicle, and defines a recess extending away from the right-angled portion thereof, which portion houses the locking member with a corresponding stopper (4) once the helmet (5) has been inserted. The helmet (5) is inserted through an opening (6) made at the rear portion thereof having a diameter matching that of the hook (2) in order to snugly confine the helmet therein, between the plate (1) and the locking member (4). The box (3) housing the hook (2) also lodges a helmet wrapper (8) made of a flexible and impervious material. The device object of the present invention can be fitted where deemed most appropriate although the most recommendable spots are the front part (9), between the legs of the driver, at the rear part (10), that is, where the trunk is located or at the motorcycle footrests (11).

The opening made at the rear portion of the helmet through which said helmet is inserted is provided with a flap (12) attached thereto by means of a movable hinge (13).

## Claims

1. Safety device for fitting helmets to vehicles comprising a plate that is adhered to an optimal spot of the vehicle, **characterized in that** said device contains a hook or curved stud that is covered by a box-shaped lid fitted in place by the edges thereof, said lid being made of a material with a reasonable degree of hardness. Said lid encloses and exposes the inner space housing the hook solidly attached to the plate adhered to the vehicle, and defines a recess extending away from the right-angled portion thereof; which portion receives the locking member ending with a corresponding stopper once the helmet has been inserted. The helmet is inserted through an opening located at the rear portion thereof, the size of said opening matching the diameter of the hook thereby snugly confining the helmet therein, between the plate and the locking member. The box housing the hook also lodges a helmet wrapper made of a flexible and impervious material. The device object of the present invention is placed where deemed most appropriate, although the most recommendable spots are the front part, between the legs of the driver, at the rear part where the trunk is located or at the motorcycle footrests.
The opening made at the rear portion of the helmet through which said helmet is inserted is provided with a flap attached thereto by means of a movable hinge.

2. Safety device for fitting helmets in vehicles, according to claim 1 **characterized in that** the flap that adheres it to the vehicle can be tubular-shaped and therefore suitable for bicycles or, depending on the vehicle, feature any other shape to better suit the specific needs.

3. Safety device for fitting helmets in vehicles, according to claim 1, **characterized in that** the surface of the flap adhered to the vehicle can be increased twofold so that said plate can comprise two hooks and fit two helmets.

4. Safety device for fitting helmets in vehicles, according to claim 1, **characterized in that** the helmet wrapper is fitted in the footrests, this being possible because said helmet wrapper is made of flexible and creasable material that can be conformed to any space available. In this case the locking member is provided lodged at the end of the footrest and the helmet is inserted in the footrest itself.

5. Special helmet **characterized in** being provided with a rear opening.

6. Special helmet, according to claim 5, **characterized in that** it is provided with a flap connected thereto by means of movable hinges.
